Europäisches Patentamt

(19) European Patent Office

Office européen des brevets

(11) Publication number: **0 256 791**
**A2**

## (12) EUROPEAN PATENT APPLICATION

(21) Application number: 87306982.7

(22) Date of filing: 06.08.87

(51) Int. Cl.4: **B65D 81/34**

(30) Priority: 18.08.86 US 897917

(43) Date of publication of application:
24.02.88 Bulletin 88/08

(84) Designated Contracting States:
AT BE CH DE ES FR GB GR IT LI LU NL SE

(71) Applicant: NABISCO BRANDS, INC.
100 DeForest Avenue
East Hanover New Jersey 07936(US)

(72) Inventor: Winter, Gerald J.
463 East 42nd Street
Paterson New Jersey 07504(US)
Inventor: Labaw, Glenn D.
11 Heather Lane
Greenwich Connecticut 06831(US)
Inventor: Puglia, Wayne J.
P.O. Box 5 22 Oak Point Drive West
Bayville, N.Y. 11709(US)
Inventor: Frazier, Alice A.
P.O. Box 620 83 Forest Street
Montclair New Jerysey 07042(US)

(74) Representative: Thomas, Roger Tamlyn et al
D. Young & Co. 10 Staple Inn
London WC1V 7RD(GB)

(54) Package for microwaveable popcorn, method for production of the package, and apparatus for sealing the package.

(57) Corn kernels packaged within an elongate bag can be popped within a microwave oven. The elongate bag is either a lay-down or stand-up bag made from a laminate of two papers with a metallized polyester film between the two paper layers at a location where the bag will contact the floor of the microwave oven. The bag is provided with a seal across its top end having at least one weakened portion aligned with the gussets of the bag, whereby the at least one weakened portion opens and permits vapors to vent from the bag after a predetermined pressure within the bag is reached. A method of preparing the package of corn kernels and an apparatus for sealing the bag filled with corn kernels is also disclosed.

EP 0 256 791 A2

# PACKAGE FOR MICROWAVEABLE POPCORN, METHOD FOR PRODUCTION OF THE PACKAGE, AND APPARATUS FOR SEALING THE PACKAGE

This invention relates to the packaging of microwaveable popcorn.

For many years, people have enjoyed popped kernels of corn as a snack food. Such snacks are traditionally prepared by either pouring kernels of corn into a screen-like container suspended over an open fire, by placing the kernels in a covered pan positioned on an operating kitchen stove burner, or placing kernels in an enclosure having electrical resistance heating elements and passing current through the electrical resistance heating elements. With any of these techniques, the kernels are heated until they pop. Although these ways of popping corn having been widely used, a more convenient and faster method of preparing popcorn has long been sought. In addition, it has been desired to pop corn in a container which need not be cleaned by can instead be thrown away after use.

The demand for fast and convenient preparation of foods has not, however, been limited to popcorn; consumers have also sought to cook a wide variety of foods quickly and conveniently. As a result of this need, the popularity of microwave ovens for food preparation has increased dramatically.

As those skilled in microwave technology have known for some time, microwaves heat materials selectively. Those materials that absorb microwaves (i.e. lossy materials) are heated by microwaves, while materials which reflect microwaves or are transparent to them are not greatly heated. Many foods are very effectively heated by microwaves, because food contains moisture which is very lossy. Consequently, microwaves are absorbed by moisture within the foods which causes the foods to be rapidly heated. This understanding of the technical basis for microwave heating has found application in preparing popcorn. Specifically, it has been discovered that moisture within the kernels of corn can be heated as they absorb microwaves. As the moisture within the kernels is heated, it vaporizes and eventually causes the kernels to pop.

The manufacture of microwave ovens or microwave ovenware have sought to capitalize upon the ability of microwave ovens to pop corn by producing plastic, glass, or ceramic appliances for popping corn. Such appliances are disclosed in U.S. Patent No. 4,156,806 to Teich et al, U.S. Patent No. 4,158,760 to Bowen et al, U.S. Patent No. 4,229,160 to Wokeck, U.S. Patent No. 4,335,291 to Ishino et al, U.S. Patent No. 4,435,628 to Bowen et al. U.S. Patent No. 4,477,705 to Danley et al, U.S. Patent No. 4,496,816 to MacNamara, U.S. Patent No. 4,532,397 to McClelland, U.S. Patent No. 4,542,271 to Tanonis et al, U.S. Patent No. 4,536,561 to Vaeth et al, and Japanese Patent Nos. 56-12928 and 56-56534. In addition, U.S. Design Patent Nos. 255,535 and 255,536 disclose an ornamentally-designed appliance for preparing popcorn with microwaves. Although such durable appliances have found utility in preparing popcorn with microwaves, they are relatively expensive and, therefore, cannot be thrown away after use. Instead, such appliances must be cleaned for reuse.

An alternative to durable appliances are cardboard containers such as those disclosed in U.S. Patent No. 4,036,423 to Gordon, U.S. Patent No. 4,038,425 to Brandenbert et al, U.S. Patent No. 4,248,901 to Austin, U.S. Patent No. 4,260,101 to Webinger, U.S. Patent No. 4,277,506 to Austin, U.S. Patent No. 4,279,933 to Austin et al, U.S. Patent No. 4,448,309 to Roccaforte et al, U.S. Patent No. 4,453,665 to Roccaforte, U.S. Patent No. 4,553,010 to Bohrer et al, U.S. Patent No. 4,584,202 to Roccaforte, and U.S. Patent No. 4,586,649 to Webinger. Similar containers can also be manufactured from plastic, as disclosed in Japanese Patent No. 60-243562. Although such containers are disposable, their cost of materials and manufacturing are still relatively expensive. In addition, such containers tent to be bulky and, therefore, difficult to store compactly.

Bags are another way to package microwaveable popcorn. U.S. Patent No. 3,582,363 to Jones discloses the use of a cellophane bag for packaging microwaveable popcorn while the more routinely-used paper bags are disclosed in U.S. Patent No. 3,851,574 to Katz et al, U.S. Patent No. 3,973,045 to Brandenberg et al, U.S. Patent Nos. 4,461,031 and 4,493,685 both to Blamer, and U.S. Patent No. 4,596,713 to Burdette.

Conventionally, corn kernels packaged in bags for popping in a microwave oven require a seal at least one end of the bag after the bag is filled with corn kernels, oil or shortening, and optionally salt, coloring, and/or flavoring. Sealing is usually achieved by providing a layer of adhesive material on the inside surface of the bag at the end to be sealed. The adhesive material is caused to adhere to itself by subjecting it to heat and pressure.

Although packaging microwaveable popcorn in paper bags has achieved some success, even this technology is not without problems. Specifically, kernels packaged in such bags can either fail to pop, scorch, or become chewy when subjected to microwaves. In addition, paper bags tend to be stained by oil or shortening injected into the bag.

A number of solutions to these problems have been developed. U.S. Patent No. 4,219,573 to Borek places a layer of insulation between the floor of the microwave oven and the bag to increase the percentage of kernels popped. U.S. Patent Nos. 4,450,180 and 4,548,826 to Watkins and Japanese Patent No. 60234562 to Golden Valley Foods (all collectively referred to hereafter as the "Golden Valley Foods patents") reduce the percentage of unpopped kernels by utilizing a bag having gussets of different sizes which form 2 tubes of different size. The popcorn and oil or shortening are added only to the smaller tube which rests on the oven floor.

U.S. Patent No. 4,283,427 to Winters et al incorporates in food cartons (rather than bags) a chemical susceptor pouch containing a combination of a solute of inorganic salts of Group IA and IIA metals and a polar solvent for the solute. Initially, the susceptor pouch absorbs microwaves, but, when the food being heated reaches a certain maximum temperature, the susceptor pouch becomes transparent to microwaves to avoid scorching.

U.S. Patent No. 4,571,337 to Cage et al ("Cage") prevents popped kernels from becoming chewy by utilizing a stand-up bag having a top which is heat-sealed so that a central portion of the top remains closed until opened by a predetermined pressure within the bag. Cage takes advantage of the existence of only two layers (i.e. the front panel and the back panel) along the center strip at the top of the bag to create a relatively weak seal at the center strip compared to the seal at the rest of the top of the bag where front and bottom panels are aligned with the gussetted side panels having four layers (i.e. the front panel, the back panel, and the two portions of the gussetted side panel). Specifically, when the top end of the bag is squeezed between two inflexible jaws, at least one of which is heated, a much stronger bond is achieved between the four layered portion at the top end of the bag than that achieved at the two layered portion at the top end of the bag, because the jaws which have inflexible, longitudinally-uniform, flat surfaces will squeeze the layers of the thicker four layered section more than the layers of the thinner two layered section. Although this technique is somewhat effective in controlling venting from the bag, it is difficult to alter selectively the pressure at which venting begins, because in Cage's product, this pressure is determined mainly as a function of the thickness of the individual layers incorporated within the bag.

U.S. Patent No. 4,292,332 to McHam prevents the staining of paper bags by providing a synthetic resin layer on the interior of the bag. The interior of Cage's bag is also provided with an inner layer of a polyester film to prevent staining.

Despite these improvements, there continues to be a demand for yet further improvements in the quality and quantity of popcorn prepared in a microwave oven.

It has now been discovered that the number, volume, and/or taste of corn kernels popped with microwaves can be improved when a package corresponding to the present invention is employed.

An improved sealing technique has been developed by which the pressure at which venting will begin can be adjusted and controlled regardless of the laminating materials utilized in the bag. This result is obtained by providing a weakened portion or portions in this seal at the top edge of the bag where there are four layers. This weakened portion(s) is made by providing at least one of the sealing jaws with a cut-out portion which creates the weakened portion(s) upon registration of the jaw with the top edge of the bag. Usually, the two jaws will form two weakened portions on the bag with one each on the front and back panels of the bag. The dimensions of the jaws surrounding this cut-out portion can be modified to cause the weakened portion of the seal to rupture at different pressures. For example, different jaws can be used to seal the bag to withstand different, predetermined pressures, or the jaws can be provided with a mechanism to adjust the seal strength to withstand such different, predetermined pressures. The weakened portion will always have a weaker seal than at the remainder of the seal (i.e. at the entire two layered portion and at the rest of the four layered portion) which ensures that the seal in the weakened portion(s) will effectively control the bag's venting pressure regardless of the thickness or type of materials used to form the bag. Typically, the predetermined pressure is selected to permit bag expansion sufficient to pop a high percentage of the kernels and to produce flavorful popcorn.

The invention generally uses a bag with gussetted side panels which are substantially equal to one another as well as front and back panels which are substantially equal. The corn kernels and the oil or shortening fill the bag cross sectionally.

The improved quality of the popcorn produced within the bag of the present invention is unexpected. The Golden valley Foods patents state that the high quality popcorn requires the use of unequal gussetted side panels, unequal front and back panels, and a bag filled with corn and oil or shortening against only the back panel and the portion of the gussetted side panels adjacent thereto --i.e. not in the area defined by the front and back panels and the adjacent gussetted side panels. In addition, Cage indicates that venting must occur at the center strip having only two layers of laminate to produce a high quality of popcorn.

The benefits achieved with the package of the present invention is further improved by preparing the bag from a laminate having an outer layer of paper, an inner layer of greaseproof paper, and a susceptor such as a layer of metallized polyester film between the inner and outer layers only at the portion of the bag which will rest on the floor of the microwave oven. Other similar laminations could also be utilized.

Yet further improvement can be obtained by utilizing corn kernels selected so that 60-75 kernels will have a total mass of 10 grams.

Although the sealing technique of the present invention is particularly suitable for use in conjunction with conventional lay-down bags, it can also be adapted to conventional stand-up bags by sealing the end of the bag opposite to the bottom panel.

Prior to filling and sealing the bags with corn kernels suitable for popping with microwaves, the bags may be formed in accordance with conventional procedures. The preferred procedures for forming, filling and sealing the bags will now be described in more detail.

First, separate webs of paper for the outer layer of the bag, greaseproof paper for the inner layer of the bag, and a susceptor such as a polyester film (e.g. polyethylene teraphthalate) which was initially completely metallized and then selectively demetallized are produced. Such as metallized films are disclosed by U.S. Patent No. 4,267,420 to Brastad, U.S Patent No. 4,258,086 to Beall, and U.S. Patent No. 4,592,914 to Kuchenbecker. Demetallizing polyester films is also well known. Typically, the polyester film is metallized and demetallized so that the percentage of light transmission of the metallized film is 35-75%, preferably 50-65%. The three webs of material are then joined together by conventional techniques to produce a laminate having two layers (i.e. paper and greaseproof paper) in some locations and three layers (i.e. paper, metallized polyester film, and greaseproof paper) in other locations. The laminate web is then folded and sealed along the length of the web to produce a tubular web which can then be cut into tubular sections of smaller length.

One end of each of the tubular segments is then sealed in a conventional manner. For example, heat and pressure can be applied to the end of the bag so that an adhesive material coated on the interior of the tube at this end will bond the tube walls together at this location. The sealed end of the tube can then be folded across the bag and against either the front or back panel with an adhesive material being applied to maintain this fold.

After sealing one end of the bag, kernels of corn and then hot, liquified oil or shortening mixed salt and optionally coloring and/or flavoring can be injected into the bag. Coloring, flavoring (e.g. butter flavoring, brown sugar flavoring, carmel flavoring, maple flavoring, cheese flavoring, cheese flavoring with jalapeno, nacho, or pizza spices, barbeque flavoring, meat flavoring, and mixtures thereof), or salt can also be added to the bag. If a lay-down bag is utilized, it is preferred to maintain these injected materials at a location substantially equidistant from the ends of the bag. This is achieved by again folding the sealed end across the front or back panel of the bag at a location substantially equal to about one third of the distance between the ends of the bag. Alternatively, the bag can be folded closer to or farther from the bottom (i.e. 25% to 40% of the distance between the ends of the bag). In addition, instead of folding prior to filling, the bag can be clamped at a location during filling and folding later. No such folding is required with a stand-up bag, because corn kernels and oil or shortening will naturally flow to the bottom panel of the bag which will desirably rest on the floor of the microwave oven. After these ingredients are injected into the bag, the hot liquified oil or shortening will cool and solidify with the corn kernels and other ingredients.

After filling, the other end of the bag is sealed using heat and pressure applied to this end of the bag so that an adhesive material coated on the interior of the bag at this end will bond the interior of the bag walls together at this location. The seal includes weakened portion(s) where four layers of the bag laminate are aligned, both as earlier described and as hereafter described in more detail. After sealing, the top third of the bag is folded over the front or back panel so that a compact package is produced. Again, alternatively, the top end of the bag can be folded between 25% to 40% of the distance between the ends of the bag depending on how the bottom end is folded. To increase the shelf life of the product, it is desirable to enclose the filled and sealed bag in a plastic pouch made from a material conventionally utilized for such purposes (e.g. polypropylene film with a heat seal layer coated on or coextruded on one or two surfaces). Alternatively, the product's shelf life can be enhanced by freezing the packaged product.

4

Particularly preferred formulations of the ingredients injected into the bag of the present invention are set forth in Table 1 (natural flavor formulation) and Table 2 (butter flavored formulation).

### TABLE 1

| | |
|---|---|
| Popcorn kernels (yellow, shelled medium-kernels of high quality and sized so that 60 to 75 kernels will have a total mass of 10 grams) | 60-70 wt % (preferably 66.99 wt %) |
| Oil (partially hydrogenated mixture of 90 wt % soybean oil and 10 wt % cottonseed oil) | 25-30 wt % (preferably 28.71 wt %) |
| Salt (average size 30-65 microns) | 3.5-4.5 wt % (preferably 4.30 wt %) |

### TABLE 2

| | |
|---|---|
| Popcorn kernels (yellow, shelled medium kernels of high quality sized so that 60 to 75 kernels will have a total mass of 10 grams) | 60-70 wt % (preferably 65.74 wt %) |
| Oil (partially hydrogenated mixture of 90 wt % soybean oil and 10 wt % cottonseed oil) | 25-30 wt % (preferably 28.28 wt %) |
| Salt (average size 30-65 microns) | 3.5-4.5 wt % (preferably 3.65 wt %) |
| Flavoring (natural butter flavoring with other natural flavors) | 1.5-2.5 wt % (preferably 2.36 wt %) |
| Coloring (artificial or natural coloring --e.g. extracts of annatto or turmeric) | .01-.10 wt % (preferably 0.05 wt %) |

In addition to an improved package of corn kernels suitable for popping with microwaves and an improved method of preparing the package, an improved apparatus for sealing the bag is disclosed.

Preferred embodiments of the invention will now be described, by way of example, with reference to the drawings in which:-

Figure 1 is a perspective view of the back panel of an unfilled, lay-down bag made in accordance with the present invention;

Figure 2 is a perspective view of the front of an unfilled lay-down bag made in accordance with the present invention and with one layer of the front panel of the bag being cut away;

Figure 3 is a cross-sectional side view of a lay-down bag in accordance with the present invention with one end sealed and filled with corn kernels and oil or shortening;

Figure 4 is a top cross-sectional view taken along line 4-4 of Figure 3;

Figure 5 is a perspective view of a lay-down bag filled with kernels of corn and shortening or oil and having both ends sealed;

Figure 6 is a perspective view of a lay-down bag made in accordance with the present invention containing kernels of corn and oil or shortening with the bag having both ends sealed and being positioned within a microwave oven;

Figure 7 is a perspective view of a lay-down bag made in accordance with the present invention containing kernels popped with microwaves;

Figure 8 shows a perspective view of a stand-up bag filled with corn kernels and oil or shortening and having a sealed end;

Figure 9 is a side cross-sectional view of a stand-up bag in a semi-compacted position, filled with unpopped corn kernels and oil or shortening, and sealed in accordance with the present invention;

Figure 10 is a perspective view of a bag positioned between one embodiment of a pair of sealing jaws;

Figure 11 is a bottom view of the sealing jaw 58 shown in Figure 10;

Figure 12 is a top view of the sealing jaw 56 shown in Figure 10;

Figure 13 is a perspective view of a bag positioned between another embodiment of a pair of sealing jaws;

Figure 14 is a bottom view of the sealing jaw 158 shown in Figure 13; and

Figure 15 is a top view of the sealing jaw 156 shown in Figure 13.

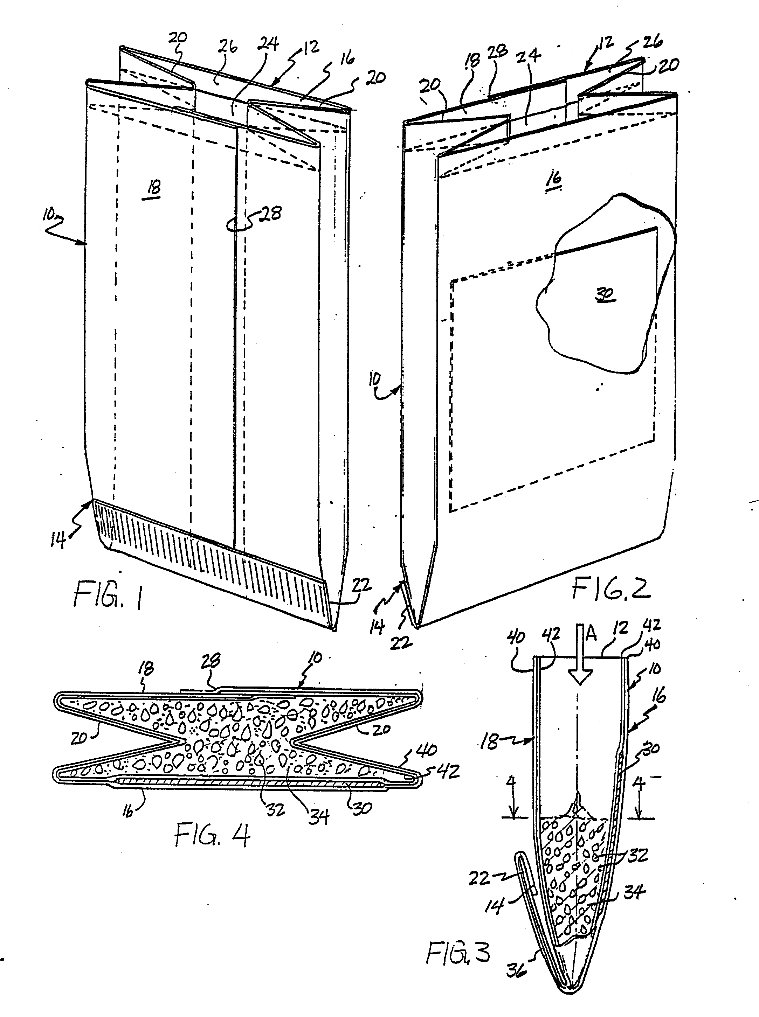

Figure 1 is a perspective view of the back of an empty, lay-down bag 10. The bag is provided with a front panel 16, a back panel 18, and a pair of inwardly-folded, gussetted side panels 20 all of which extend between an open top end 12 and a sealed bottom end 14. Bottom end 14 is folded over and bonded to back panel 18 at bottom seal 22. Bag 10 is sealed longitudinally by back panel seal 28 which extends between top end 12 and bottom end 14. The gussetted side panels 20 extend inwardly toward each other between front panel 16 and back panel 18; however, a center strip 24 of front panel 16 and back panel 18 lies between the inner-most point of the gussetted side panels 20. The interior of bag 10 near top end 12 is provided with an adhesive 26 which bonds to itself upon application of heat and pressure.

Figure 2 is a perspective view of the front of an empty, lay-down bag according to the present invention. Within front panel 16 is a susceptor 30 formed from a metallized and selectively demetallized polyester film. Although a wide variety of metals and polyester films can be used to produce susceptor 30, the preferred polyester film is polyethylene terephthalate, while the metal is preferably aluminum. Instead of metallizing and demetallizing polyester film, a metallized polyester film can be cut to the desired size and placed between layers of paper or other laminating materials. Alternatively, a susceptor material can be printed on a paper layer or on another laminating material.

Front panel 16 and back panel 18 have a width across top end 12 which is generally about 1.3 to 1.5 and preferably about 1.4 times as large as the width of each of the gussetted side panels 20 folded into bag 10. The ratio of the width of susceptor 30 across bag 10 to its length extending partially between top end 12 and bottom end 14 is generally about 1:1.0 to 1:1.4, preferably about 1 to 1.15.

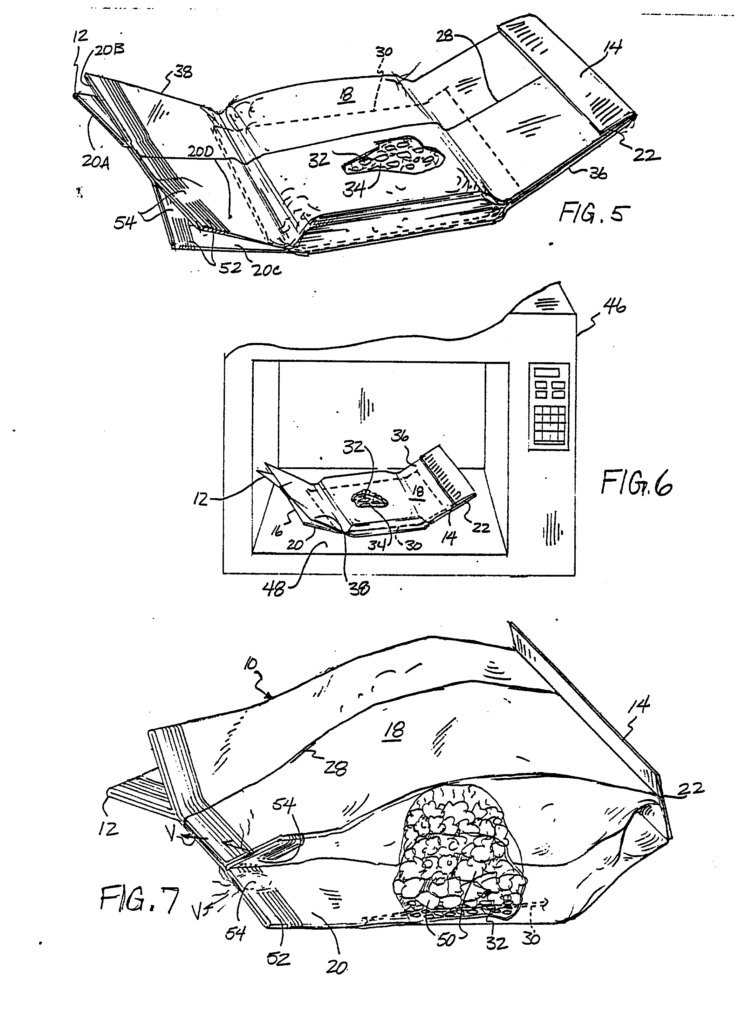

Figure 3 is a side cross-sectional view of a lay-down bag according to the present invention which is filled with unpopped corn kernels 32 and shortening or oil 34. These materials and optionally coloring additive(s), flavoring materials(s), or salt are injected through top end 12 of bag 10, as indicated by arrow A. Preferably, the kernels are first injected with the shortening or oil mixed with salt and optionally coloring and/or flavoring being added subsequently. Prior to injecting corn kernels 32 and oil or shortening 34, the lower third of the bag is folded toward back panel 18 to form a folded lower end 36. As a result, the unpopped kernels of corn 32, the shortening or oil 34 and any other ingredients are held within the middle third of the lay-down bag substantially equidistant from ends 12 and 14. Although the shortening or oil 34 is added in a hot liquified state, it eventually cools and solidifies in admixture with the other ingredients.

Figure 3 also shows a side cross-sectional view of the laminates which from bag 10, while Figure 4 shows a top cross sectional view of the bag shown in Figure 3 taken along line 4-4. Bag 10 is formed from a three layered laminate at front panel 16 and a two layered laminate every where else except at back panel seal 28 where the two layered laminates overlap. The three layered laminate at front panel 16 consists of an outer paper layer 40, an inner greaseproof paper layer 42, and a susceptor 30 between layers 40 and 42. Elsewhere, the bag is only laminated by outer paper layer 40 and inner greaseproof paper layer 42.

Figure 5 shows a perspective view of a lay-down bag filled with unpopped kernels of corn 32 and solidified oil or shortening 34 and having top end 12 and bottom end 14 sealed. This filled and sealed bag not only has a folded lower end 36, it is also provided with an upper end 38 folded toward back panel 18. Folded lower end 36 and folded upper end 38 can be folded over the portion of bag 10 containing unpopped corn kernels 32 and oil or shortening 34 for compact packaging and shipping. In this folded position, the bag can be frozen and/or sealed within a pouch (not shown) of plastic (e.g. polypropylene film) to increase the shelf life of the product.

Bag 10 is sealed across top end 12 by a plurality of sealing lines 52 which are impressed into the exterior of the bag by a pair of sealing jaws at least one of which is heated, as discussed hereafter. Most of the sealing lines 52 across top end 12 of the bag are interrupted by weakened portions 54. Only a few sealing lines 52 extend across the entire bag to seal weakened portions 54 with a sealing strength below that at any other location across top end 12. As a result of the difference in sealing strength across top end 12, the seal at this end will open up only at weakened portions 54 when the pressure within bag 10 exceeds a predetermined pressure due to the generation of water vapor from the popping corn kernels.

As shown in Figure 6, the sealed bag filled with corn kernels, solidified shortening or oil, etc. is placed on the floor 48 of microwave oven 46. The bag is positioned with front panel 16 which contains susceptor 30 closest to the oven door 48. In addition, folded lower end 36 and folded upper end 38 are spread apart from the portion of the bag containing the corn kernels 32 and solidified shortening or oil 34. After placing the bag on oven floor 48 in this manner, the door (not shown) of microwave oven 46 is closed, and the microwave oven is turned on for approximately 5 minutes. The kernels then begin to pop as a result of the moisture within each kernel vaporizing. This evaporation of moisture causes the bag to expand such that back panel 18 moves upwardly away from front panel 16. In addition, inwardly-folded gussetted side panels 20 move outwardly so that each of the folded parts comprising each gusset move apart.

Instead of placing the bag on the actual floor of the oven 48, it can rest on an elevated support provided as an accessory to the oven or as an element of the packaging.

Figure 7 is a perspective view of a sealed lay-down bag containing popped corn 50. As a result of vaporized moisture produced when corn kernels are popped, the bag has expanded. During popping of the corn kernels, the evolved water vapor has increased the pressure within the bag above the predetermined pressure at which the seal at weakened portions 54 will open. Once this seal opens, vapors $\underline{V}$ are vented from the bag at weakened portions 54. It is possible that only one of the weakened portions 54 will open and then be capable of venting the bag by itself. If this occurs, the other weakened portion 54 will stay closed.

By utilizing the illustrated package, an increased percentage of the kernels in the package pop compared to prior art products; however, a few unpopped corn kernels 32 will remain after popping. The popped kernels 50 tend to collect within the bag at a level above the unpopped corn kernels 32. As shown in Figure 7, these unpopped kernels 32 form a layer at the bottom of the bag adjacent to susceptor 30. By being in a location adjacent the susceptor, the likelihood that the unpopped kernels will be popped increases, because heat emanates from the susceptor as a result of it being in contact with microwaves. After popping, bag 10 can be opened and popped corn removed.

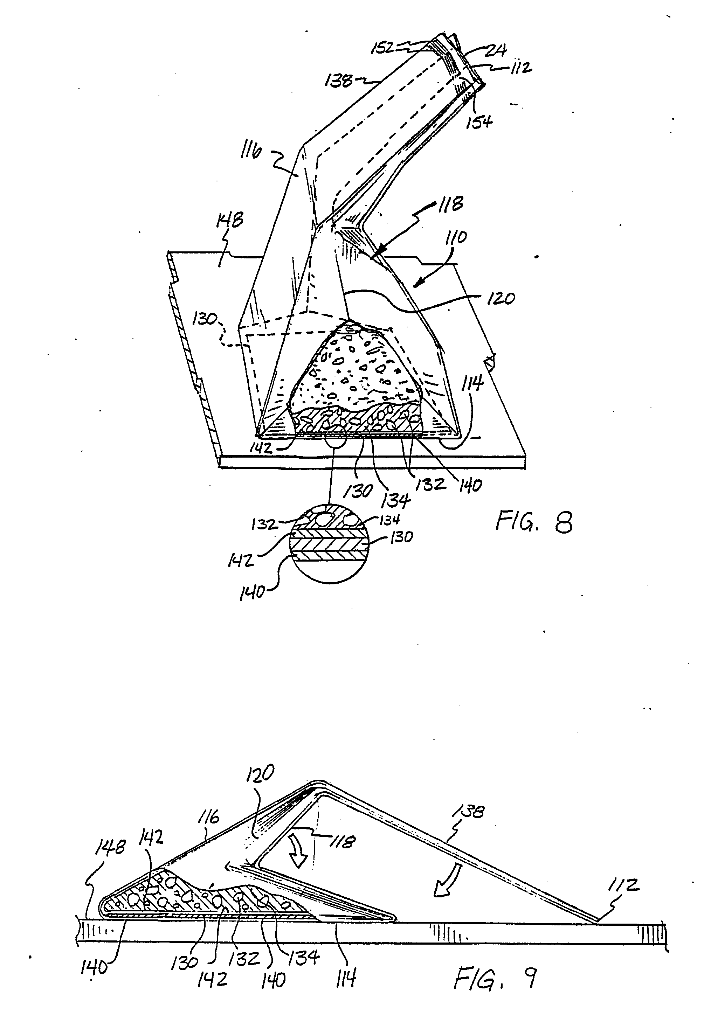

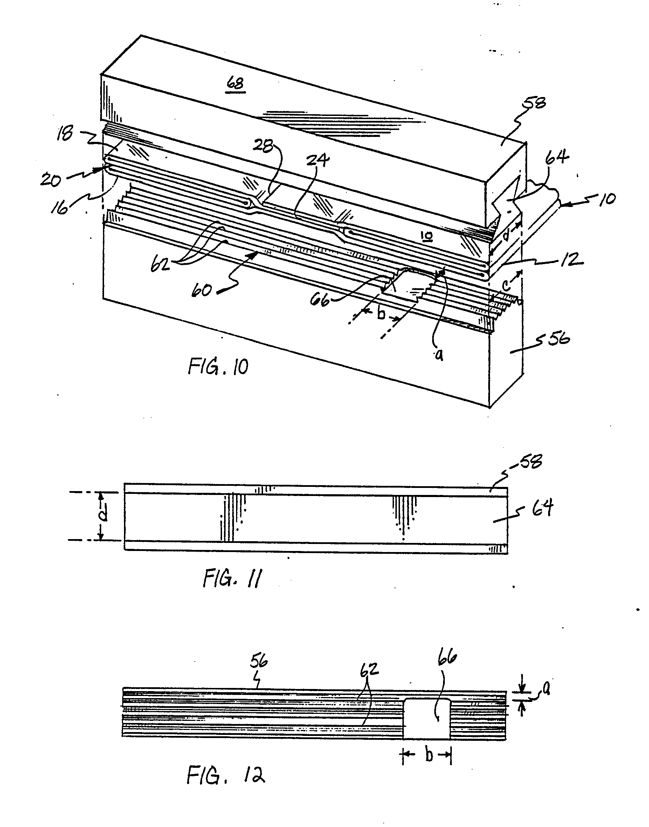

Figures 8 and 9 shown another embodiment of the present invention which utilizes a stand-up bag 110. This bag is provided with a front panel 116, a back panel 118, and a pair of inwardly-folded gussetted side panels 120 which extend between a top end 112 and a conventional bottom panel 114. As in the lay-down bag embodiment, a center strip 124 is formed between the innermost extent of the inwardly-folded gussetted side panels 120. Susceptor 130, a metallized polyester film, is located in bottom panel 114. The laminations of the stand up bag embodiment are similar to those of the lay-down bag embodiment, except that the stand up bag embodiment has the three layer lamination (i.e. outer paper layer 140, inner greaseproof paper layer 142, and susceptor of metallized of polyethylene terephthalate 130) formed in bottom panel 114 instead of the front panel. Front panel 116, back panel 118, and inwardly-folded gussetted side panels 120 all are formed from a laminate of two layers --i.e. an outer paper layer 140 and an inner greaseproof paper layer 142.

Like the lay-down bag embodiment, the stand-up bag embodiment also has a longitudinally-extending back seam (not shown) on back panel 118. In addition, the interior of the bag adjacent top end 112 is provided with a layer of adhesive (not shown) which will seal the bag at top end 112 upon the application of pressure and heat from a pair of sealing jaws.

The packaged product shown in Figures 8 and 9 is prepared by first filling stand-up bag 110 with unpopped kernels 132, then filling with oil or shortening, and, optionally, a coloring additive, flavoring material, or salt 134, and finally sealing top end 112. As shown by the arrows in Figure 9, stand-up bag 110 can be folded into thirds for compact packaging, storage, and shipment by moving back panel 118 downwardly toward bottom panel 114 and then folding upper end 138 against the opposite side of the bottom panel 114.

Following filling and sealing of stand-up bag 110, the oil or shortening 134 cools and solidifies. When the filled and sealed stand-up bag 110 is placed in a microwave oven so that bottom panel 114 rests on the oven floor 148 and the oven is turned on, moisture within the kernels begins to vaporize which eventually pops the kernels. As the kernels pop, they will move upwardly within the bag. The unpopped kernels will tend to return to a position closer-to bottom panel 114 than the popped kernels due to their difference in density. This brings the unpopped kernels closer to susceptor 130 so that heat emanating from the susceptor can more easily pop these kernels. The generation of water vapor within stand-up 110 as a result of kernels being popped causes the bag to expand at front panel 116, back panel 118, and inwardly-folded gussetted side panels 120. The top end 112 of stand-up bag 110 is sealed in the same manner as the top end of the lay-down bag. Specifically, a plurality of impressed sealing lines 152 extend across top end 112 to seal the bag. However, most of sealing lines 152 are interrupted at weakened portions 154 so that the seal at top end 112 will permit venting from the bag after the pressure within it reaches a predetermined level. At this predetermined pressure, the seal will burst at weakened portions 154.

Figure 10 shows a perspective of a top end 12 of bag 10 positioned between a heated first jaw 56 and a second jaw 58.

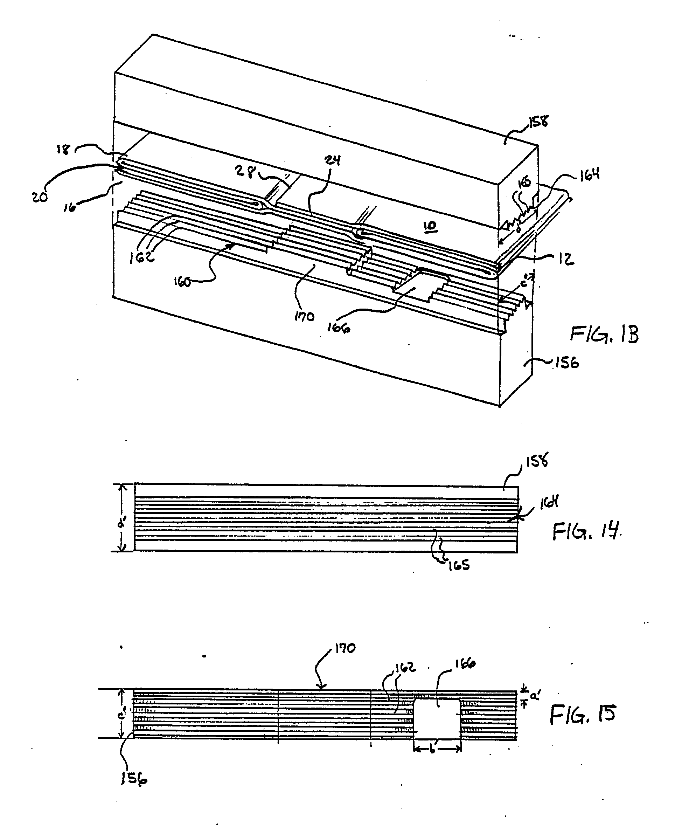

The first jaw 56 is made of metal and is provided with a serrated, sealing surface 60 having a width $\underline{c}$ and a plurality of serrations 62. Sealing surface 60 is heated by running electrical current through a cylindrical resistance heater positioned in a longitudinal hole (not shown) through jaw 56. Serrations 62 extend along the length of first jaw 56 except where interrupted by first jaw cut out 66 which constitutes a depression in serrated sealing surface 60. A top view of first jaw 56 is illustrated in Figure 12.

Second jaw 58 is formed from a metal block 68 having a rubber insert 64 with tapered edges for holding it within the metal block 68. The rubber insert 64 has a sealing surface width of $\underline{d}$ which is greater than or equal to width $\underline{c}$ of sealing surface 60. A bottom view of second jaw 58 is shown in Figure 11. Rubber insert 64 serves to equalize the seal strength across the top of the bag. In some cases, rubber insert 64 may have a square cross-section produced by molding.

When first jaw 56 and second jaw 58 are compressed against top end 12 of bag 10, the hot serrations 62 are pressed against an outer surface of bag 10 to form the previously-discussed sealing lines shown in Figures 5, 7, and 8. Although the rubber sealing surface 64 is substantially flat, the pressure of the serrations 62 against the bag caused the portions of the opposite side of the bag aligned with serrations 62 to be pressed harder than other portions against rubber sealing surface 64, thereby creating sealing lines on both sides of the bag.

First jaw cut out 66 is a depression formed in first jaw 56 where serrations 62 are interrupted. When first jaw 56 is urged against top end 12 of bag 10, no serrations 62 contact bag 10 where it contacts first jaw cut out 66. Only a few of the serrations 62 extend across first jaw 56 without interruption by first jaw cut out 66. As a result, the portions of top edge 12 of bag 10 which are aligned with first jaw cut out 66 have far fewer sealing lines running through them compared to the remainder of top end 12. This reduction in the number of sealing lines causes the portion of top end 12 aligned with first jaw cut out 66 to have a weaker seal than the rest of top end 12.

The strength of the seal at the weakened portions can be adjusted by modifying the distance $\underline{a}$ between the edge and first jaw cut out 66 or by modifying the width $\underline{b}$ of first jaw cut out 66. Specifically, if distance $\underline{a}$ is decreased or width $\underline{b}$ is increased, the strength of the seal at the weakened portions is decreased. Alternatively, if distance $\underline{a}$ is increased or width $\underline{b}$ is decreased, the strength of the seal at the weakened portions is increased. Although modification of distance $\underline{a}$ and/or width $\underline{b}$ could be achieved by utilizing a different first jaw 56, it would also be well within the skill of the art to make a single first jaw 56 having a mechanism with which distance $\underline{a}$ or width $\underline{b}$ can be changed.

Figure 13 to 15 shown another embodiment of a pair of sealing jaws in accordance with the present invention.

Figure 13 depicts a perspective view of a top end 12 of bag 10 positioned between a heated first jaw 156 and a heated second jaw 158.

The first jaw 156 is made of metal and is provided with a serrated, sealing surface 160 having a width $c'$ and a plurality of serrations 162. Sealing surface 160 is heated by running electrical current through a cylindrical resistance heater positioned in a longitudinal hole (not shown) through jaw 156. Serrations 162 extend along the length of first jaw 156 except where interrupted by first jaw cut out 166 which constitutes a depression in serrated sealing surface 160. Sealing surface 160 is provided with a raised portion 170 which is positioned to align with center strip 24 of bag 10 so that a stronger seal is formed at this location than at the portion of the bag contacted by cut out 166. Raised portion 170 can be .001-.01 inches, preferably .004 inches, above the remainder of sealing surface 160. A top view of first jaw 156 is illustrated in Figure 15.

Second jaw 158 is also made of metal and is provided with a sealing surface 164 having a width $d'$ and a plurality of serrations 165. Sealing surface 164 is heated in the same way as sealing surface 160. A bottom view of second jaw 158 is shown in Figure 14.

When first jaw 156 and second jaw 158 are compressed against top end 12 of bag 10, serrations 162 and 165 are pressed against an outer surface of bag 10 to form the previously-discussed sealing lines shown in Figures 5, 7, and 8. First jaw 156 and second jaw 158 are aligned so that serrations 162 and 165, which would mesh together if bag 10 were not between, them, impress sealing lines on both sides of top of the bag.

First jaw cut out 166 is a depression formed in first jaw 156 where serrations 162 are interrupted. When first jaw 156 is urged against top end 12 of bag 10, no serrations 162 contact bag 10 where it contacts first jaw cut out 166. Only a few of the serrations 162 extend across first jaw 156 without interruption by first jaw cut out 166. As a result, the portions of top end 12 of bag 10 which are aligned with first jaw cut out 166 have far fewer sealing lines running through them compared to the remainder of top end 12. This reduction in the number of sealing lines causes the portion of top end 12 aligned with first jaw cut out 166 to have a weaker seal than the rest of top end 12. The strength of the weakened seal can be adjusted by modifying width $\underline{b}'$ and distance $\underline{a}'$ in Figures 13-15 in a manner analogous to that discussed with respect to the embodiment shown in Figures 10-12.

## EXAMPLE

Four packages of microwave popcorn were prepared in accordance with the present invention by forming lay-down bags with equal gussetted side panels, equal front and back panels, and a two layer laminate of an outer layer of paper and an inner layer of greaseproof paper except in the front panel which additionally includes between the paper layers a layer of polyethylene terephthalate metallized with aluminium and selectively demetallized. The bottom of the bags are heat sealed, while the top is unsealed.

With the lower end of the bags folded toward the back panel of the bag, 70 grams of corn kernels selected so that 60 to 75 kernels will have a total mass of 10 grams are injected through the top of the bags with the bags fully opened cross-sectionally. 29 grams of a liquified, partially hydrogenated mixture of 90 weight % soybean oil and 10 weight % cottonseed oil at 50°C and mixed with 3.4 grams of salt are charged through the top of the fully opened bags. The contents of the bags are allowed to cool to 25°C so that the oil mixture solidifies.

The bags are then sealed by applying heat and pressure at the top end of the bag in accordance with the present invention so that the seal has at least one weakened portion where the front and back panels and the adjacent gussetted side panels are aligned cross-sectionally. Such sealing is achieved with an apparatus like that shown in Figures 13-15. The top end of the bag is then folded over the back panel for compact storage.

Each of the four packages of microwave popcorn is unfolded and placed individually in a 650 watt microwave oven for popping. With the front panel of the package resting on the oven floor and with the door of the oven closed, each bag is then separately subjected to microwaves for 3.5 minutes. The popcorn is produced in the four packages is then analyzed for performance based on popping volume, number of unpopped kernels, and percentage of unpopped kernels. The results of this analysis are set forth below in Table 3.

### TABLE 3

| SAMPLE | POPPED VOLUME (cc) | UNPOPPED KERNELS (gm) | % UNPOPPED KERNELS |
|---|---|---|---|
| #1 | 2500 | 7.37 | 10.5 |
| #2 | 2500 | 9.83 | 14.0 |
| #3 | 2500 | 7.10 | 10.1 |
| #4 | 2400 | 8.60 | 12.3 |
| Averages | 2475 | 8.23 | 11.7 |
| Standard Deviation | 50 | 1.25 | 1.79 |

Comparing the above performance of the microwave popcorn packages made in accordance with the present invention to those sold under the trademarks POP'SECRET™ (marked as corresponding to U.S. Patent No. 4,450,180) and ORVILLE REDENBACHER'S® GOURMET®, it is found that the packages in this experiment corresponding to the present invention achieve higher popped volume than both the competing products. As to the popped kernels and percent of unpopped kernels, the packages in this experiment corresponding to the present invention are superior to that of ORVILLE REDENBACHER'S® GOURMET® but slightly poorer than POP'SECRET™.

**Claims**

1. A package of corn kernels suitable for popping with microwaves comprising:
an elongate bag with a pair of ends between which a front panel, a back panel, and inwardly-folded, gussetted side panels connecting the front panel and the back panel extend, wherein the front panel, the back panel, and the side panels are arranged so that when said bag is flattened with the gussetted side panels folded fully inwardly toward each other, the front panel and the back panel contact each other along a center strip located between the inwardly-folded, gussetted side panels;
a plurality of corn kernels and oil or shortening within said bag; and
a seal across at least one end of said bag formed by applying heat and pressure to said bag which causes the front panel and the back panel to bond each other at the center strip and to each of the inwardly-folded, gussetted side panels, wherein said seal has at least one weakened portion where the front and back panels are bonded to at least one of said inwardly-folded, gussetted side panels, whereby only at least one of weakened portions will open after a predetermined pressure within said bag is reached during the popping of corn kernels.

2. A package according to claim 1, wherein said bag comprises a laminate having an outer layer of paper, an inner layer of greaseproof paper, and a layer of metallized polymeric film between the inner and outer layers.

3. A package according to claim 2, wherein said layer of metallized polymeric film is located only on the front panel.

4. A package according to claim 2 or 3, wherein the metallized polymeric film is polyethylene terephthalate metallized with aluminum.

5. A package according to claim 1, wherein said bag is a lay-down bag.

6. A package according to claim 1, wherein said bag is a stand-up bag having a flat bottom panel at one end.

7. A package according to any preceding claim, wherein the inwardly-folded portions of each of the gussetted side panels are substantially equal, whereby the inwardly-folded portion of each of the gussetted side panels adjacent the front panel define a longitudinal-extending tube equal to that defined by the back panel and the adjacent inwardly-folded portion of each of the gussetted side panels.

8. A package according to any preceding claim, wherein said plurality of corn kernels and said oil or shortening substantially fill said bag cross-sectionally.

9. A package according to any preceding claim, wherein said oil or shortening is solidified.

10 A package according to any preceding claim, wherein said corn kernels are selected so that 60 to 75 kernels will have a total mass of 10 grams.

11. A package according to any preceding claim, further comprising salt in admixture with said corn kernels and said oil or shortening.

12. a package according to claim 11, further comprising a flavoring material and optionally a coloring additive, wherein the flavoring material is selected from the group consisting of butter flavoring, brown sugar flavoring, caramel flavoring, maple flavoring, cheese flavoring, cheese flavoring with jalapeno, nacho, or pizza spices, barbeque flavoring, meat flavoring, and mixtures thereof in admixture with said corn kernels, said oil or shortening, and said salt.

13. A package according to any preceding claim, wherein said corn kernels and said oil or shortening is substantially equidistant from the ends of said bag.

14. A package according to any preceding claim, wherein said seal is formed from a material within said bag which adheres to itself upon application of heat and pressure.

15. A package according to any preceding claim, wherein said seal is formed as a plurality of impressed lines extending across at least a portion of said bag.

16. A package according to claim 15, wherein only a few of said impressed lines extend entirely across said bag and the remaining impressed lines are interrupted across the at least one weakened portion.

17. A package or corn kernels suitable for popping with microwaves comprising:

an elongate bag with a pair of ends between which a front panel, a back panel, and inwardly-folded, gussetted side panels connecting the front panel and the back panel extend, wherein the front panel, the back panel, and the side panels are arranged so that when said bag is flattened with the gussetted side panels fully loaded inwardly toward each other, the front panel and the back panel contact each other along a center strip located between each of the inwardly-folded, gussetted side panels, wherein said bag is a laminate having an outer layer of paper, an inner layer of greaseproof paper, and a layer of polyethylene terephthalate film metallized with aluminum between the inner and outer layers only on said front panel, and wherein the inwardly-folded portion of each of the gussetted side panels adjacent the front panel define a longitudinally-extending tube equal to that defined by the back panel and the adjacent inwardly-folded portion of each of the gussetted side panels;

a plurality of corn kernels, solidified oil or shortening, a coloring additive, salt, and a flavoring material substantially filling said bag cross-sectionally and located substantially equidistant from the ends of said bag; and

a seal across at least one end of said bag formed by a material within said bag which adheres to itself upon application of heat and pressure which causes the front and back panels to bond to each other at the center strip and to each of the inwardly-folded, gussetted side panels with a plurality of impressed lines extending across at least a portion of said bag, and wherein said seal creates weakened portions where the front and back panels are bonded to said inwardly-folded, gussetted side panels through which only a few of the impressed lines extend due to interruption of the remaining impressed lines at the weakened portions, whereby only at least one of the weakened portions will open after a predetermined pressure within said bag is reached during popping of the corn kernels.

18. A method of preparing a package of corn kernels suitable for popping with microwaves, said method comprising:

providing an elongate bag with first and second ends between which a front panel, a back panel, and inwardly-folded, gussetted side panels connected the front panel and the back panel extend, wherein the front panel, the back panel, and the side panels are arranged so that when said bag is flattened with the gussetted side panels folded inwardly toward each other, the front panel and the back panel contact each other along a center strip located between each of the inwardly-folded gussetted side panels;

providing a plurality of corn kernels and oil or shortening within said bag; and

sealing across the first end of said bag by applying heat and pressure which causes the front panel and the back panel to bond to each other at the center strip and to each of the inwardly-folded, gussetted side panels, wherein said sealing creates at least one weakened portion where either or both the front panel and the back panel are bonded to said inwardly-folded, gussetted side panels, whereby only at least one of the weakened portions will be opened after a predetermined pressure within the bag is reached during the popping of corn kernels.

19. A method according to claim 18 further comprising:

sealing the second end of said bag by folding the second end across said bag against the front or the back panel and applying an adhesive where the second end contacts said bag prior to said providing a plurality of corn kernels and oil or shortening.

20. A method according to claim 18 further comprising:

sealing the second end of said bag and

folding the sealed second end across said bag and against the front or back panel prior to said providing a plurality of corn kernels and oil or shortening.

21. A method according to claim 18, 19 or 20, wherein said providing a plurality of corn kernels and oil or shortening comprises:

injecting the plurality of corn kernels into said bag through the first end, while the second end is sealed and folded across said bag and

injecting the oil or shortening in liquified from into said bag containing the plurality of corn kernels through the first end.

22. A method according to claim 21 further comprising:

permitting the oil or shortening within said bag to cool and solidify.

23. A method according to claim 22 further comprising:

folding the sealed first end across said bag to form a compact package for shipment and storage.

24. A method according to any one of claims 18-23, wherein said package is as specified in any of claims 2-14.

25. A method according to any one of claims 18-24, wherein the sealing across the first end is formed as a plurality of impressed lines extending across at least a portion of said bag.

26. A method according to claim 25, wherein only a few of said impressed lines extends entirely across said bag and the remaining impressed lines are interrupted across said at least one weakened portion.

27. A method according to claim 26, wherein said sealing across the first end is achieved by compressing the front and back panels between first and second aligned jaws at least one of which is heated to seal the first end so that the seal will withstand a uniform maximum pressure significantly higher than the predetermined pressure except at the weakened portion.

28. A method according to claim 27, wherein the first jaw is a metal block with a metal sealing surface, while the second jaw is a metal block fitted with a rubber sealing surface positioned in alignment with the metal sealing surface.

29. A method according to claim 28, wherein the metal sealing surface has a plurality of longitudinally-extending serrations, wherein all serrations except a few are interrupted by a depression in the metal sealing surface defined by a cut out extending across the serrations from a first edge of the metal sealing surface toward a second edge of the metal sealing surface to a location defined by a cut out wall.

30. A method according to claim 27, wherein the first jaw and the second jaw are metal blocks with a plurality of longitudinally-extending serrations, and wherein the serrations of first jaw mesh with those of the second jaw.

31. A method according to claim 30, wherein all except a few of the serrations of the first jaw are interrupted by a depression in the metal sealing surface of the first jaw defined by a cut out extending across the serrations from a first edge of the metal sealing surface toward a second edge of the metal sealing surface to a location defined by a cut out wall.

32. A method according to claim 29 or 31, wherein the strength of the at least one weakened portion can be increased by decreasing the cut out size in a direction parallel to the serrations or by increasing the distance from the second edge to the cut out wall.

33. A method according to claim 29 or 31, wherein the strength of the at least one weakened portion can be decreased by increasing the cut out size in a direction parallel to the serrations or by decreasing the distance from the second edge to the cut out wall.

34. A method according to claim 31, wherein the sealing surface of the first jaw has a centrally-located raised portion with the serrations extending through it and, wherein the raised portion is positioned above the remainder of the first jaw sealing surface.

35. A method according to any one of claims 18-26, wherein said sealing across the first end is achieved by compressing the front and back panels between a pair of aligned jaws at least one of which is heated to seal the first end so that the seal will withstand a uniform maximum pressure significantly higher than the predetermined pressure except at at least one of the weakened portions.

36. A bag sealing apparatus comprising:
a first jaw having a longitudinal-extending sealing surface;
heating means to heat at least said first jaw and its longitudinally-extending sealing surface;
a second jaw having a longitudinally-extending sealing surface, wherein said first and second jaws are positioned so that their sealing surfaces face and are aligned with each other; and
a cutout in the sealing surface of said first jaw which produces a weakened portion in a package sealed between said first and second jaws in alignment with where said cutout contacts the package.

37. A method for sealing a gussetted bag with an apparatus comprising:
a first jaw having a longitudinally-extending sealing surface;
heating means to heat at least said first jaw and its longitudinally-extending sealing surface;
a second jaw having a longitudinally-extending sealing surface, wherein said first and second jaws are positioned so that their sealing surfaces face and are aligned with each other; and
a cutout in the sealing surface of said first jaw, wherein said method comprises:
placing a sealable portion of said bag between said first and second jaws;
actuating said heating means; and
pressing said bag between said heated first jaw and said second jaw, whereby said bag is sealed with a weakened portion in alignment with where said cutout contacts the bag.

FIG. 1

FIG. 2

FIG. 4

FIG. 3

FIG. 5

FIG. 6

FIG. 7

152
24
138
112
154
116
118
148
110
120
130
114
142
130 134 132 140

132 134
142 130
140

FIG. 8

120
116
138
148 142
118
112
140
130 132 134 114
142 140

FIG. 9

FIG. 10

FIG. 11

FIG. 12

FIG. 13

FIG. 14

FIG. 15